(19) Europäisches Patentamt / European Patent Office / Office européen des brevets

(11) **EP 3 284 206 B1**

(12) **FASCICULE DE BREVET EUROPEEN**

(45) Date de publication et mention de la délivrance du brevet:
**25.01.2023 Bulletin 2023/04**

(21) Numéro de dépôt: **16731193.5**

(22) Date de dépôt: **06.04.2016**

(51) Classification Internationale des Brevets (IPC):
*H04L 9/00* (2022.01)    *G06F 21/54* (2013.01)
*G06F 11/28* (2006.01)

(52) Classification Coopérative des Brevets (CPC):
**H04L 9/50; G06F 11/28; G06F 21/54; H04L 9/004;**
H04L 2209/12

(86) Numéro de dépôt international:
**PCT/FR2016/050782**

(87) Numéro de publication internationale:
**WO 2016/166445 (20.10.2016 Gazette 2016/42)**

(54) **PROCÉDÉ DE SÉCURISATION DE L'EXÉCUTION D'UN PROGRAMME**

VERFAHREN ZUR SICHERUNG DER AUSFÜHRUNG EINES PROGRAMMS

METHOD OF SECURING THE EXECUTION OF A PROGRAM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.04.2015 FR 1500794**

(43) Date de publication de la demande:
**21.02.2018 Bulletin 2018/08**

(73) Titulaire: **Rambus Inc.**
**Sunnyvale, CA 94089 (US)**

(72) Inventeurs:
• **BENCHAALAL, Othman**
**13090 Aix En Provence (FR)**

• **DUPAQUIS, Vincent**
**13120 Biver (FR)**

(74) Mandataire: **Marchand, André et al**
**OMNIPAT**
**24 Place des Martyrs de la Résistance**
**13100 Aix-en-Provence (FR)**

(56) Documents cités:
WO-A2-03/042547    WO-A2-2009/156689
FR-A1- 2 790 844    US-A- 4 251 885
US-A1- 2008 022 130

# EP 3 284 206 B1

**Description**

La présente invention concerne le contrôle de l'exécution d'un programme par un processeur, notamment pour protéger le programme contre une modification ou une altération, avant ou durant son exécution.

Les circuits intégrés sécurisés, comme les circuits intégrés pour cartes à puce, font l'objet de diverses attaques de la part de fraudeurs qui cherchent à découvrir leur structure et/ou les secrets qu'ils mémorisent ou manipulent. Il s'agit par exemple de circuits de cryptographie, ou de microprocesseurs programmés pour exécuter des algorithmes de cryptographie.

Certaines méthodes de piratage consistent à injecter des erreurs dans un circuit intégré pour perturber l'exécution d'opérations dites sensibles, par exemple des opérations d'authentification ou des opérations d'exécution d'un algorithme de cryptographie.

De telles attaques, appelées attaques par injection de faute ou d'erreur, peuvent intervenir pendant des phases de calculs dits sensibles, par exemple pendant des phases de calcul d'un code d'identification ou pendant la lecture d'une clé de cryptographie dans une mémoire. Elles permettent, en combinaison avec des modèles mathématiques et à partir de résultats intentionnellement faux, grâce aux perturbations appliquées au circuit intégré, de déterminer un élément secret comme une clé secrète ou un mot de passe, ou de déduire la structure d'un algorithme de cryptographie.

En particulier, les attaques localisées consistent à introduire des perturbations (glitches) en un point déterminé du circuit, par exemple au moyen d'un faisceau laser ou un faisceau de rayons X. Une attaque localisée peut concerner par exemple la tension d'alimentation, un chemin de données ou d'adresse, ou le signal d'horloge du circuit intégré.

Ainsi une attaque peut porter sur les données lues dans la mémoire programme, et provoquer une modification d'un code d'instruction transitant sur un bus de données. Le code d'instruction modifié peut être interprété comme un saut alors que l'instruction lue n'était pas une instruction de saut, ou comme une autre instruction alors que l'instruction lue était une instruction de saut. Une telle modification peut également provoquer une modification de l'opérande associée à un code d'instruction de saut, c'est-à-dire modifier l'adresse de destination du saut.

L'attaque peut porter également sur l'adresse de lecture de la mémoire programme, elle peut provoquer un saut en l'absence de tout code d'instruction de saut. Si l'attaque porte sur le chemin des adresses de lecture de la mémoire programme, le saut ne concerne qu'une seule adresse lue, puisque le compteur de programme ("program counter") de l'unité centrale n'est pas modifié, sauf si le code d'instruction lu est un saut.

Un saut ainsi provoqué peut entraîner l'exécution d'une routine inaccessible en fonctionnement normal, comme une routine de déchargement de données, ou permettre un contournement de procédures de vérification.

L'attaque peut porter également sur l'adresse de lecture d'une donnée et donc modifier la valeur d'un opérande d'une instruction.

Il est donc souhaitable de détecter que l'exécution d'un programme par un processeur a été perturbée. Il est également souhaitable de détecter une modification d'un programme par une personne non habilitée. Il peut être également souhaitable que cette détection consomme un minimum de ressources du processeur exécutant le programme. Il peut être également souhaitable que cette détection puisse être mise en oeuvre sans augmenter les tâches de programmation et de modification du programme par une personne habilitée.

Le document FR 2 790 844 décrit un dispositif d'exécution de programme comprenant un processeur et une unité de surveillance interconnectée entre le processeur et le registre d'instruction, de sorte que toutes les instructions lues par le processeur transitent par l'unité de surveillance. Deux instructions de surveillance sont insérées au début et à la fin d'une séquence d'instructions d'un programme à surveiller. La première instruction de surveillance commande l'initialisation d'un registre. A chaque lecture d'une instruction de la séquence d'instructions, l'unité de surveillance applique une opération de hachage à la valeur contenue dans le registre et à la valeur numérique de l'instruction, et charge le résultat dans le registre. A la fin de l'exécution de cette séquence, la seconde instruction de surveillance est exécutée et commande à l'unité de surveillance de comparer la valeur dans le registre à une valeur attendue.

Le document WO 03/042547 décrit un procédé de surveillance de l'exécution d'un programme consistant à placer dans le programme des instructions de surveillance comprenant une instruction d'initialisation d'un compteur. Chaque section de programme à surveiller comprend une instruction de surveillance incrémentant le compteur de un. A la fin d'une séquence d'instructions, une instruction de surveillance finale compare le compteur à une valeur attendue dépendant nécessairement du nombre de valeurs dans la série de valeurs attribuées au compteur.

Des modes de réalisation concernent un procédé d'exécution d'un programme par un dispositif électronique, le procédé comprenant, des étapes consistant à : exécuter une opération du programme configurée pour charger une valeur choisie de manière arbitraire d'une donnée initiale appartenant à une série de données ordonnées, exécuter une série d'opérations de calcul réparties dans le programme, comprenant des opérations de calcul configurées chacune pour calculer une donnée courante de la série de données en fonction d'une donnée précédente de la série de données, exécuter une opération de calcul finale de la série d'opérations, configurée pour calculer une donnée finale de la série de données, et exécuter une opération du programme, configurée pour détecter une erreur d'exécution du programme en comparant la donnée courante de la série de données avec une valeur attendue de la donnée courante ou la donnée

2

finale, la donnée finale présentant une valeur attendue indépendante du nombre de données dans la série de données, et étant calculée par l'opération finale en fonction de la donnée courante de la série de données et d'une donnée de compensation finale.

Selon un mode de réalisation, une valeur attendue d'une donnée de la série de données est calculée lors d'un prétraitement de génération du programme par un module de calcul de constantes utilisées par l'opération de détection d'erreur et par l'opération de calcul finale de la série d'opérations de calcul.

Selon un mode de réalisation, la valeur attendue de la donnée finale est déterminée uniquement à partir de la donnée initiale.

Selon un mode de réalisation, la valeur attendue de la donnée finale est fixée égale au complément binaire à un de la donnée initiale.

Selon un mode de réalisation, une des opérations de calcul de la série d'opérations de calcul est configurée pour déterminer l'une des données de la série de données en fonction d'un rang de la donnée dans la série de données.

Selon un mode de réalisation, une des opérations de calcul de la série d'opérations de calcul est configurée pour déterminer une donnée de la série de données par un calcul de signature appliqué à la donnée précédente de la série de données.

Selon un mode de réalisation, une des opérations de calcul est configurée pour déterminer une première donnée de la série de données en fonction de la valeur d'une variable propre au programme et de la valeur de la donnée précédente de la série de données, et une opération de calcul suivante de la série d'opérations de calcul est configurée pour déterminer en fonction de la première donnée, une seconde donnée de la série de données, la seconde donnée présentant une valeur attendue indépendante de la variable propre au programme.

Selon un mode de réalisation, une donnée de la série de données est obtenue par un calcul de contrôle de redondance cyclique appliqué à la donnée précédente de la série de données.

Selon un mode de réalisation, une donnée de la série de données est obtenue par un calcul arithmétique modulaire appliqué à la donnée précédente de la série de données, en choisissant pour module un nombre premier supérieur à une valeur maximum des données de la série de données.

Selon un mode de réalisation, le procédé comprend des étapes consistant à : attribuer des séries de données distinctes à une première fonction du programme et à une seconde fonction appelée par la première fonction, au retour à l'exécution de la première fonction à la suite de l'appel et de l'exécution de la seconde fonction, exécuter une opération de calcul de la série d'opérations de calcul, appliquée à une donnée de la série de données de la première fonction, et à la donnée finale calculée de la série de donnée de la seconde fonction pour obtenir une troisième donnée, et exécuter une autre opération de calcul de la série d'opérations de calcul, appliquée à la troisième donnée pour obtenir une quatrième donnée présentant une valeur attendue qui est indépendante d'une donnée finale attendue de la série de données attribuée à la seconde fonction.

Selon un mode de réalisation, le programme comprend une boucle de traitement itératif mettant en oeuvre un premier compteur d'itérations variant dans un premier sens à chaque itération, le procédé comprenant des étapes consistant à : gérer un second compteur d'itérations variant dans un second sens inverse du premier sens, de sorte que la somme des valeurs du premier compteur et du second compteur reste constante, et dans la boucle de traitement itératif, exécuter une opération de calcul de la série d'opérations de calcul, appliquée à une donnée calculée de la série de données, et à une constante dépendant de la somme des valeurs du premier compteur et du second compteur, et exécuter une autre opération de calcul appliquée à la valeur attendue de la constante pour obtenir une cinquième donnée de la série de données, présentant une valeur attendue qui est indépendante de la valeur attendue de la somme des valeurs du premier compteur et du second compteur.

Des modes de réalisation concernent également un procédé de sécurisation de l'exécution d'un programme, mis en oeuvre par un processeur, le procédé comprenant des étapes consistant à : générer un fichier de définition de valeurs de constantes utilisées par le procédé d'exécution tel que précédemment défini, rechercher dans un code source ou prétraité du programme une instruction relative à une comparaison de la donnée courante de la série de données avec une valeur attendue de la donnée courante, calculer la valeur attendue de la donnée courante en fonction de la donnée initiale de la série de données, et du rang de la donnée courante dans la série de données, et insérer dans le fichier de définition de valeurs de constantes une constante ayant la valeur attendue calculée.

Selon un mode de réalisation, le procédé de sécurisation comprend des étapes consistant à : rechercher dans le code source du programme une instruction relative à une opération de calcul finale de la série d'opérations de calcul, calculer la valeur d'une donnée de compensation finale à laquelle est appliquée l'opération de calcul finale, de manière à ce que l'opération de calcul finale appliquée à la valeur de compensation finale fournisse la donnée finale attendue de la série de données, et insérer dans le fichier de déclaration de valeurs de constantes une constante ayant la valeur de la donnée de compensation finale.

Selon un mode de réalisation, le procédé de sécurisation comprend des étapes consistant à : rechercher dans le code source du programme une instruction de compensation relative à une opération de calcul d'une donnée de la série de données, appliquée à une donnée n'appartenant pas à la série de données, calculer la valeur d'une donnée de compensation à laquelle est appliquée l'opération de calcul de l'instruction de compensation, de manière à ce que cette opération de calcul fournisse une donnée de la série de données, qui est indépendante d'une valeur attendue de la donnée n'appartenant pas à la série de données, et insérer dans le fichier de déclaration de valeurs de constantes une constante ayant la valeur de la donnée de compensation.

Des modes de réalisation concernent également un produit-programme informatique comprenant des instructions qui lorsqu'elles sont exécutées par un processeur mettent en oeuvre le procédé d'exécution défini précédemment.

Selon un mode de réalisation, le produit-programme informatique comprend les opérations de calcul de la série d'opérations de calcul et les opérations de détection d'erreur se présentent sous la forme de macro-instructions.

Des exemples de réalisation de l'invention seront décrits dans ce qui suit, à titre non limitatif en relation avec les figures jointes parmi lesquelles :

la figure 1 représente schématiquement un environnement adapté à la mise en oeuvre d'un mode de réalisation,
les figures 2A, 2B représentent sous la forme de blocs, différents modules d'une application configurée pour générer un code exécutable à partir d'un code source, en deux phases illustrées par les figures 2A et 2B, selon un mode de réalisation,
les figures 3 à 7 représentent schématiquement différents codes sources d'un programme, dans lesquels sont introduites des instructions de contrôle de l'exécution du programme, selon un mode de réalisation.

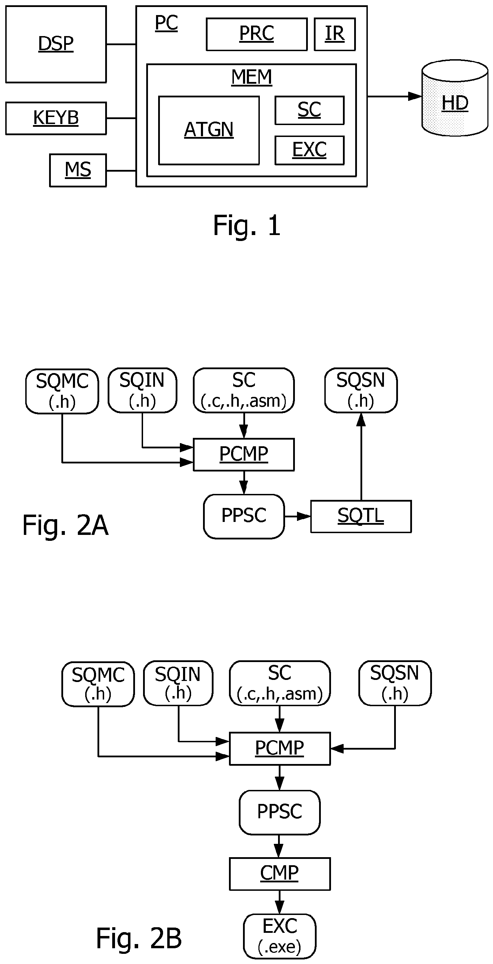

La figure 1 représente un dispositif électronique PC adapté à la mise en oeuvre d'un procédé de contrôle selon un mode de réalisation. Le dispositif PC comprend une mémoire MEM mémorisant un programme, un processeur PRC apte à exécuter le programme, ainsi que d'autres programmes aptes à contrôler des organes matériels du dispositif comme des organes d'entrée/sortie comprenant une interface de commande d'utilisateur. L'interface de commande peut ainsi comprendre un écran d'affichage DSP, un ou plusieurs organes d'entrée comme une souris MS et un clavier KEYB, et/ou d'autres organes périphériques d'entrée/sortie comme une surface tactile et/ou des circuits d'interface réseau IR. Le dispositif électronique PC peut être un ordinateur ou tout autre dispositif tel qu'un téléphone intelligent (smartphone) ou une tablette numérique.

La mémoire MEM stocke une application ATGN configurée pour générer automatiquement un programme protégé EXC, à partir d'un code source standard SC. Le code source SC et le programme généré EXC peuvent être sauvegardés dans une mémoire non volatile HD telle qu'un disque dur. Le programme EXC peut ensuite être exécuté par un processeur tel que le processeur PRC.

Les figures 2A, 2B représentent différents modules de l'application ATGN permettant de générer un programme exécutable EXC à partir d'un code source SC. L'application ATGN comprend un module de pré-compilation PCMP recevant en entrée un ou plusieurs fichiers contenant le code source à compiler SC, et un ou plusieurs fichiers contenant la définition de types et de valeurs de constantes utilisées dans le code source, ainsi qu'un fichier SQIN de définition de constantes de contrôle et un fichier SQMC de définition de macro-instructions. Les fichiers SQMC et SQIN sont utilisés pour mettre en oeuvre un procédé de contrôle d'exécution de programme, selon un mode de réalisation. Sur la figure 2A, le module de pré-compilation PCMP produit un fichier PPSC contenant un code source précompilé, dans lequel des macro-instructions sont remplacées par des instructions spécifiées dans le fichier SQMC notamment et dans lequel les constantes sont remplacées par leurs valeurs respectives définies dans le fichier SQIN. Le fichier PPSC est traité par un module de calcul de constantes SQTL de l'application ATGN, qui est configuré pour générer un fichier SQSN de définition de valeurs de constantes utilisées pour mettre en oeuvre le procédé de contrôle d'exécution de programme, et en particulier des valeurs de constantes utilisées par les macro-instructions définies dans le fichier SQMC, qui sont présentes dans le fichier PPSC. Sur la figure 2B, le module de pré-compilation PCMP produit à nouveau un fichier PPSC contenant un code source précompilé, dans lequel des macro-instructions sont remplacées par des instructions spécifiées dans le fichier SQMC, et toutes les constantes sont remplacées par leurs valeurs respectives définies dans les fichiers SQIN et SQSN. Le fichier PCMP est fourni à un module de compilation CMP qui génère le code exécutable EXC correspondant au code source contenu dans le fichier précompilé PPSC.

Bien entendu, les fichiers de définition de constantes SQSN, SQIN et des macro-instructions SQMC peuvent être regroupés en un seul fichier.

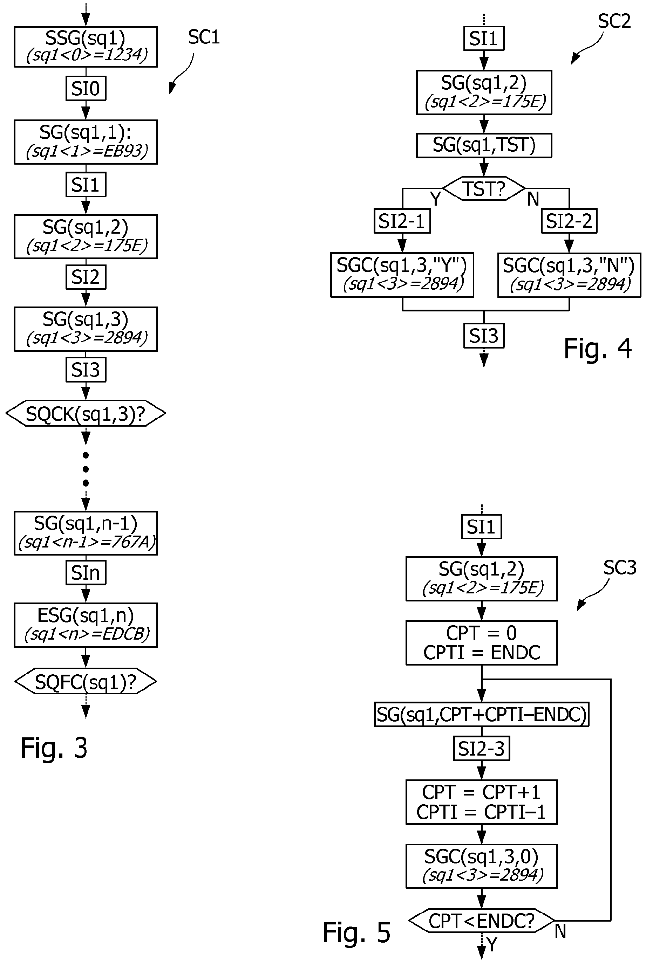

La figure 3 représente un code source SC1 d'un programme. Ce code source comprend plusieurs séries d'instructions SI0, SI1, SI2, SI3, ... SIn exécutées successivement. Chaque série d'instructions SI0-SIn peut être considérée comme une étape du programme.

Selon un mode de réalisation, l'exécution du programme généré à partir du code source SC1 est contrôlée à l'aide d'instructions spécifiques insérées dans le code source entre les séries d'instructions SI0-SIn. Ces instructions spécifiques comprennent notamment une instruction SSG(sq1) d'appel d'une fonction d'initialisation SSG définissant une donnée initiale $sq1<0>$ d'une série de donnée $sq1$, des instructions $SG(sq1,i)$ d'appel d'une fonction de calcul de signature SG pour calculer une donnée $sq1<i>$ de la série $sq1$, correspondant à une étape i du programme, et une instruction $ESG(sq1,n)$ d'appel d'une fonction de calcul final ESG pour calculer une donnée finale $sq1<n>$ de la série sq1, correspondant à une étape finale n du programme. Ainsi, l'instruction SSG(sq1) définit une nouvelle série données sq1 en fournissant la valeur de la donnée initiale sq1<0> de la série de données (fixée à $1234 dans l'exemple de la figure 3, le symbole "$" indiquant que la valeur est exprimée en format hexadécimal). La valeur attribuée à la donnée initiale sq1 <0> est choisie d'une manière indépendante des données du programme. Ainsi, la valeur de la donnée sq1<0> peut être choisie d'une manière arbitraire ou aléatoire. La valeur de la donnée initiale sq1<0> est par exemple définie dans le fichier SQIN. L'instruction SG(sq1,1) appelle la fonction de calcul de signature SG qui est appliquée à la donnée courante de la série sq1, soit sq1<0> et au numéro de l'étape 1, pour calculer la donnée sq1<1> de la série sq1 correspondant à l'étape 1 du programme. Dans l'exemple de la figure 3, cette instruction attribue à la donnée sq1<1> le résultat du calcul fourni par la fonction SG, soit la valeur $EB93 en format hexadécimal. L'instruction SG(sq1,2) affecte la valeur $175E calculée à partir de la donnée sq1<1>, à la donnée sq1<2> de la série sq1, correspondant à l'étape 2. L'instruction SG(sq1,3) affecte la valeur $2894 calculée à partir de la donnée sq1<2>, à la donnée sq1<3> de la série sq1 à l'étape 3. L'instruction SG(sq1,n-1) affecte la valeur $767A à la donnée sq1<n-1> de la série sq1 à l'étape n-1. Chaque donnée de la série sq1 présente donc un rang dans la série correspondant à l'étape du programme pour laquelle elle est calculée. Chaque donnée sq1<i> de la série sq1 est ainsi calculée par la fonction SG en fonction de la donnée précédente sq1<i-1> dans la série sq1.

A tout moment durant l'exécution du programme, la donnée courante sq1<i> de la série sq1, peut être comparée à l'aide d'une instruction SQCK, SQFC, à sa valeur attendue ($1234, $EB93, $175E, $2894, ... $EDCB) en fonction du numéro i de l'étape en cours d'exécution du programme. Si cette comparaison révèle une différence, cela signifie que l'une des instructions d'appel des fonctions SSG, SG et ESG n'a pas été exécutée ou que leur exécution a été perturbée, ou encore que l'un des paramètres d'appel des fonctions SSG, SG et ESG a été modifié, lors de sa lecture par exemple. Dans l'exemple de la figure 3, l'instruction SQCK se trouve après le calcul de la donnée sq1<3> de la série sq1, et l'instruction SQFC se trouvant après le calcul de la donnée finale sq<n> permet de comparer la valeur calculée de la donnée finale à sa valeur attendue, soit $EDCB. De cette manière, il est possible de détecter si l'exécution du programme a été perturbée ou si le programme a été modifié sans mettre à jour la série de données sq1. Toute mesure appropriée peut alors être prise lors de l'exécution du programme pour traiter cette perturbation.

Selon un mode de réalisation, la fonction de calcul SG est un calcul de signature appliqué à la donnée courante sq1<i> de la série sq1 et au numéro d'étape i, de 1 à n sur la figure 3.

Selon un mode de réalisation, la donnée finale sq1<n> de la série sq1 présente la valeur de la donnée initiale sq1<0> complémentée à un (obtenue en inversant tous les bits de la valeur initiale), soit $EDCB pour une donnée initiale sq1<0> égale à $1234. A cet effet, module SQTL calcule une donnée de compensation finale CF telle que la fonction de calcul de signature SG appliquée à la donnée sq1<n-1> de la série sq1 à l'avant dernière étape n-1 et à la donnée de compensation finale CF fournisse la donnée finale sq1<n>. Ainsi, la fonction ESG(sq1,n) peut être réalisée en appliquant la fonction SG à la donnée de la série sq1 à l'étape n-1 et à la donnée de compensation finale CF :

$$sq1<n> = ESG(sq1,n) = SG(sq1, CF) = SIG(sq1<n-1>,CF),$$

SIG étant une fonction de calcul de signature applicable à plusieurs paramètres.

La figure 4 représente un code source SC2 du programme, dans le cas où la série d'instructions SI2 comprend deux séries d'instructions SI2-1 et SI2-2 alternatives qui sont exécutées en fonction du résultat d'un test "TST ?" portant sur une variable de type booléen TST égale à "Y" ou "N". Le programme peut être contrôlé en prévoyant dans le code source SC2, avant l'instruction de test TST, une instruction SG(sq1,TST) d'appel de la fonction de calcul de signature SG appliquée à la donnée courante sq1<2> de la série sq1 et à la variable TST. Après chacune des séries d'instructions alternatives SI2-1 et SI2-2, le code source CS2 comprend également une instruction SGC(sq1,3,"Y"), SGC(sq1,3,"N") permettant de compenser la valeur de la variable TST introduite dans la série sq1 par l'instruction SG(sq1,TST), pour obtenir la valeur de la donnée sq1<3> de la série sq1 correspondant à l'étape 3, prévue en l'absence de l'instruction SG(sq1,TST), soit $2894. Ainsi, l'instruction SGC(sq1,3,CS1) figure dans la branche du test où la variable A reçoit la valeur de la constante CS1, et l'instruction SGC(sq1,3,CS2) figure dans la branche du test où la variable A reçoit la valeur de la constante CS2. Ainsi, si la valeur de la variable A introduite dans la série par l'instruction SG(sq1,A), correspond à la valeur qui est compensée par l'instruction SGC(sq1,3,CS1) ou SGC(sq1,3,CS2), la valeur de la donnée sq1<3> qui est calculée par cette dernière instruction ne dépend pas de la valeur de la variable A, dans la mesure où elle peut être calculée uniquement à partir de la donnée initiale sq1<0> de la série sq1 et du numéro d'étape 3 correspondant.

De cette manière, il est possible de détecter si l'instruction de test "TST?" n'est pas exécutée, si une partie de l'une ou l'autre des séries d'instructions SI2-1, SI2-2 n'est pas exécutée, et/ou si la valeur de la variable A est forcée à une autre valeur que CS1 ou CS2, ou modifiée durant l'exécution des séries d'instructions SI2-1 ou SI2-2. Les valeurs des constantes CS1, CS2 peuvent être définies dans le fichier SQIN.

La figure 5 représente un code source SC3 du programme, dans le cas où la série d'instructions SI2 comprend une boucle dans laquelle une série d'instructions SI2-3 est exécutée un nombre ENDC de fois. Le code source SC3 comprend une instruction d'initialisation d'un compteur CPT, et dans la boucle, une instruction d'incrémentation de un du compteur et une instruction de test de fin de boucle comparant la valeur du compteur CPT au nombre d'itérations ENDC.

Pour pouvoir contrôler la bonne exécution de la boucle, le code source SC3 comprend une instruction "CPTI=ENDC" d'initialisation d'un compteur inversé CPTI qui reçoit le nombre d'itérations ENDC, cette instruction d'initialisation étant placée avant l'entrée dans la boucle. Dans la boucle, le code source SC3 comprend une instruction "CPTI=CPTI-1" de décrémentation du compteur inversé CPTI et une instruction d'appel de la fonction de calcul de signature SG appliquée à la donnée courante sq1<2> de la série sq1 et à la valeur "CPT+CPTI-ENDC" qui est censée être nulle. Après la sortie de la boucle, le code source SC3 comprend une instruction d'appel de la fonction SGC(sq1,3,0) permettant de compenser la valeur de la variable "CPT+CPTI-ENDC" censée être nulle, introduite dans la série sq1 par l'instruction SG(sq1, CPT+CPTI-ENDC), pour obtenir la valeur de la donnée sq1<3> de la série sq1 correspondant à l'étape suivante, en l'absence de l'instruction SG(sq1, CPT+CPTI-ENDC), soit $2894 à l'étape 3. Ainsi, la valeur de la donnée sq1<3> ne dépend pas des valeurs des compteurs CPT, CPTI, ou du nombre d'itérations ENDC, dans la mesure où elle peut être calculée uniquement à partir de la donnée initiale sq1<0> de la série sq1 et du numéro d'étape 3 correspondant. En revanche, si la valeur de l'un ou l'autre des compteurs CPT, CPTi est modifiée par une attaque, la valeur introduite dans la série sq1 par l'instruction SG(sq1, CPT+CPTI-ENDC) n'est pas nulle et donc n'est pas compensée par l'instruction de compensation SGC(sq1,3,0). Il en résulte que la valeur de la donnée sq1<3> n'est pas égale à sa valeur attendue ($2894 dans l'exemple de la figure 5).

De cette manière, il est possible de vérifier si les valeurs des compteurs CPT, CPTI sont cohérentes. A noter qu'il est également possible de contrôler que le nombre d'itérations prévu a bien été exécuté en prévoyant en fin de boucle une instruction SG(sq1, ENDC-CPT) ou SG(sq1, CPTI), suivie d'une instruction de compensation SGC(sq1, 3, 0), pour obtenir la valeur de la donnée sq1<3> correspondant à l'étape suivante, soit $2894 pour l'étape 3. A noter également que le calcul CPT+CPTI-ENDC dans l'instruction SG(sq1, CPT+CPTI-ENDC) peut être remplacé par tout autre calcul d'une variable censée être invariante, dès lors que la valeur de cette variable peut être déterminée à l'avance, notamment lors de la compilation du programme. La valeur de la constante ENDC peut être par exemple définie dans le fichier SQIN.

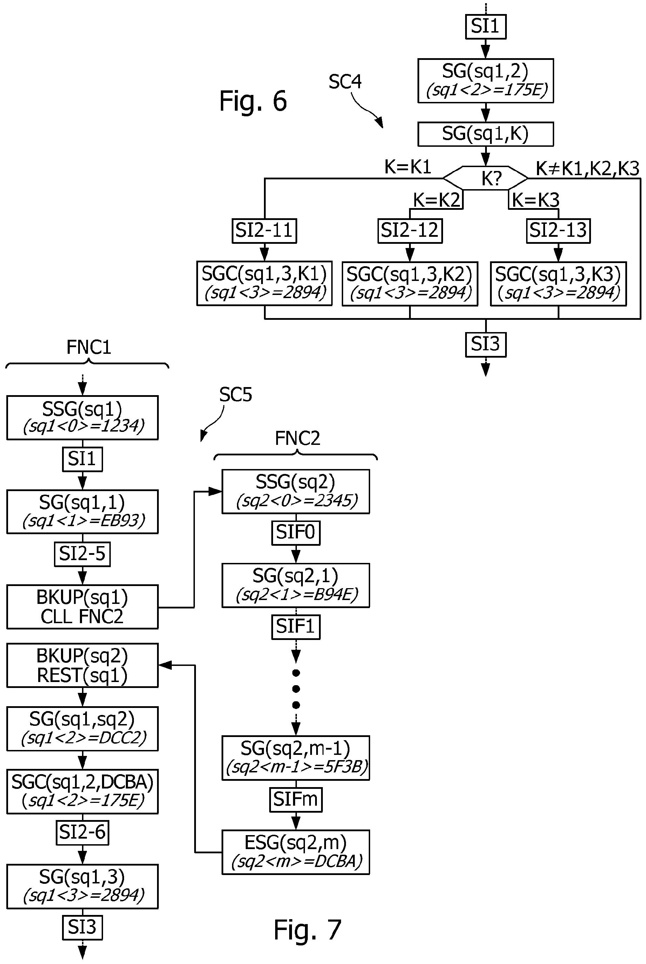

La figure 6 représente un code source SC4 du programme, dans le cas où la série d'instructions SI2 comprend plusieurs (trois dans l'exemple de la figure 6) séries d'instructions SI2-11, SI-12 et SI2-13 alternatives qui sont exécutées en fonction du résultat d'un test "K?" portant sur la valeur d'une variable K pouvant prendre une valeur parmi plusieurs valeurs de constantes prédéfinies K1, K2, K3. Les valeurs numériques ou alphanumériques des constantes K1, K2, K3 peuvent être définies dans le fichier SQIN. L'exécution du programme peut être contrôlée en prévoyant une instruction SG(sq1,K) d'appel de la fonction de calcul de signature SG appliquée à la donnée courante sq1<2> de la série sq1 et à la valeur de la variable K, avant le test "K? " de la valeur de la variable K, et une instruction de compensation SGC(sq1,3,K1), SGC(sq1,3,K2), SGC(sq1,3,K3) prévue dans chaque branche d'instructions alternative. Les instructions SGC(sq1,3,K1), SGC(sq1,3,K2), SGC(sq1,3,K3) permettent de compenser la valeur de la variable K introduite dans la série sq1 par l'instruction SG(sq1,K) pour obtenir la valeur ($2894) de la donnée sq1<3> de la série sq1, correspondant à l'étape suivante (3), en l'absence de l'instruction SG(sq1,K). Si le déroulement de l'exécution du programme est perturbé, de sorte que soit la série d'instructions SI2-11, SI2-12, SI2-13 exécutée n'est pas celle qui correspond à la valeur de la variable K, qui a été introduite dans la série sq1 par l'instruction SG(sq1,K), l'instruction de compensation SGC(sq1,3,K1), SGC(sq1,3,K2), SGC(sq1,3,K3) qui est exécutée ensuite, ne peut pas atteindre la valeur attendue de la donnée sq1<3> correspondant à l'étape 3. Si aucune des séries d'instructions SI2-11, SI2-12, SI2-13 n'est exécutée, aucune des instructions de compensation SGC(sq1,3,K1), SGC(sq1,3,K2), SGC(sq1,3,K3) n'est exécutée et donc le programme ne peut pas se trouver dans une condition d'atteindre la valeur attendue de la donnée sq<3> correspondant à l'étape 3 ($2894 dans l'exemple de la figure 6). Il est à noter que le cas où la variable K est différente des constantes K1, K2 et K3 peut être traité comme un cas non erroné du programme, et prévoyant dans l'embranchement du programme correspondant à ce cas, une opération de calcul de signature permettant d'atteindre la valeur attendue de la série de données sq1 pour l'étape 3. En outre, il peut être prévu dans le programme des instructions pour s'assurer que cet embranchement soit exécuté uniquement si la valeur de K est différente des constantes K1, K2 et K3 (par exemple des instructions de test et de lecture de cette donnée).

De cette manière, il est possible de détecter si le test "K? " portant sur la variable K n'est pas exécuté ou si la valeur de la variable K est forcée à une autre valeur que K1, K2, K3, ou si la série d'instructions SI2-11, SI2-12 ou SI2-13 exécutée ne correspond pas à la valeur de la variable K. Dans l'exemple de la figure 6, la branche correspondant au cas où la variable K n'est pas égale à l'une des valeurs K1, K2, K3 ne comporte pas d'instruction de compensation SGC(sq1,3,Ki), avec Ki = K1, K2 ou K3. Il en résulte qu'une erreur sera détectée si la variable K déterminée avant le test K? est égale à une valeur différente de K1, K2 et K3. Les valeurs des constantes K1, K2, K3 peuvent être définies dans le fichier SQIN.

La figure 7 représente un code source SC5 du programme, dans le cas où la série d'instructions SI2 appartient à un programme ou une fonction appelante FNC1 et comprend une instruction "CLL FNC2" d'appel d'un sous-programme ou d'une fonction FNC2. Ici et dans ce qui suit, le terme fonction désigne plus généralement une routine ou une procédure. Dans l'exemple de la figure 7, la série d'instructions SI2 comprend une série d'instructions SI2-5 avant l'instruction "CLL FNC2" et une série d'instructions SI2-6 après cette instruction. Par ailleurs, la fonction FNC2 comprend m séries d'instructions SIF0, SIF1, ... SIFm. Comme précédemment, l'exécution de la fonction FNC2 peut être contrôlée en y insérant des instructions d'appel aux fonctions SSG, SG et ESG. La fonction SSG permet d'initialiser une autre série de données sq2 (à sq2<0> = \$2345 dans l'exemple de la figure 7). La valeur initiale sq2<0> de la série sq2 peut être définie dans le fichier SQIN. Les instructions d'appel de la fonction SG permettent de calculer successivement les données sq2<1> à sq2<m-1> de la série sq2 en fonction d'un numéro d'étape de 1 à m-1, et l'instruction d'appel de la fonction ESG permet de calculer la donnée finale sq2<m> de la série sq2 égale au complément binaire à un de la donnée initiale sq2<0> (= \$2345) de la série sq2, soit \$DCBA.

Pour contrôler l'exécution du programme, l'instruction d'appel "CLL FNC2" est précédée d'une instruction de sauvegarde / mémorisation de la donnée courante (sq1<2>) de la série sq1 du programme appelant. Le retour au programme ou à la fonction appelante FNC1, à la suite de l'exécution de la fonction appelée FNC2, est suivi des instructions suivantes :

- une instruction BKUP de sauvegarde / mémorisation de la donnée finale sq2>m> de série sq2 de la fonction appelée FNC2,
- une instruction de restauration REST de la donnée sauvegardée sq1<2> de la série sq1 de la fonction appelante FNC1,
- une instruction SG(sq1, sq2) d'appel de la fonction de calcul de signature SG appliquée à la donnée courante (restaurée) sq1<2> de la série sq1, et à la donnée courante sq2<m> de la série sq2 de la fonction appelée FNC2, soit \$EDCB, et
- une instruction de compensation SG(sq1, 2, sq2<m>), soit SG(sq1, 2, \$EDCB), pour compenser la donnée finale sq2<m> de la série sq2 introduite dans la série sq1, afin d'obtenir la donnée sq1<2> de la série sq1 correspondant à l'étape en cours, ici \$175E pour l'étape 2.

De cette manière, si l'instruction d'appel de la fonction appelée FNC2 n'est pas exécutée ou si l'exécution de la fonction FNC2 est perturbée, de sorte que la valeur de la donnée courante de la série sq2 lors du retour à la fonction appelante FNC1 est différente de la valeur de la donnée finale sq2<m>, les valeurs des données suivantes sq1<2>, sq1<3>, ... de la série sq1 de la fonction appelante FNC1 seront différentes des valeurs attendues.

Les fonctions SSG, SG, ESG, SGC peuvent être des macro-instructions définies dans le fichier SQMC. La fonction SSG d'initialisation d'une série de données sq peut être réalisée simplement en chargeant dans un registre ou une variable SQRG, la donnée initiale sq<0> d'une série de données sq, la valeur de la donnée sq<0> pouvant être définie dans le fichier SQIN sous la forme d'une déclaration de valeur de constante, et passée en paramètre d'appel de la fonction SSG.

La fonction SG(sq,X) peut être réalisée en appliquant le calcul de signature SIG à la donnée courante de la série sq contenue dans le registre SQRG, et à la valeur de la variable X. A cet effet, la valeur de la donnée courante sq<s> de la série sq et la variable X peuvent par exemple être représentés sous la forme de nombres hexadécimaux ayant un nombre fixe de chiffres (par exemple 4 ou 8), qui sont concaténés avant d'appliquer le calcul de signature :

$$SG(sq,X) = SIG(SQRG,X).$$

De même, le calcul de donnée suivante sq<s+1> (pour l'étape suivante s+1) de la série sq peut être calculée à l'aide de la fonction de calcul de signature SIG, de la manière suivante :

$$sq<s+1> = SG(sq,s+1) = SIG(sq<s>,(s+1)).$$

La fonction ESG(sq,n) peut être ramenée à la fonction de calcul de signature SG(sq,CF) appliquée à la donnée courante sq<n-1> de la série sq mémorisée dans le registre SQRG, et à une constante CF calculée par le module SQTL pour que le résultat fourni par la fonction SG(sq,CF) soit égal au complément binaire à un ~(sq<0>) de la donnée initiale sq<0> de la série sq :

$$ESG(sq,n) = SG(sq,CF) = SIG(SQRG,CF) = \sim(sq<0>).$$

Le nom de la constante CF qui est spécifié dans les instructions correspondant à la macro-instruction ESG(sq,n) et dans le fichier SQSN, peut contenir la valeur initiale sq<0> de la série sq.

La fonction SGC(sq,s,X) peut être ramenée à la fonction de calcul de signature SG(sq,CP) appliquée à la donnée courante de la série sq, et à une constante CP de compensation calculée par le module SQTL pour que le résultat fourni par la fonction SG(sq,CP) soit égal à la valeur de la donnée sq<s> de série sq correspondant à l'étape s :

$$SGC(sq,s,X) = SG(sq,CP) = SIG(SQRG,CP) = sq<s>,$$

si la donnée courante sq<s> présente la valeur attendue.

Le nom de la constante CP qui est spécifié dans la macro-instruction peut être défini à partir de la valeur de la donnée initiale sq<0> de la série sq, du numéro d'étape s et de la valeur de la constante X.

Les fonctions de sauvegarde et de restauration BKUP, REST peuvent également être définies sous la forme de macro-instructions dans le fichier SQMC. La macro-instruction de sauvegarde BKUP peut être remplacée par une instruction de mémorisation dans une variable SQSV, de la valeur contenue dans le registre SQRG. Pour permettre la sauvegarde de plusieurs données de séries distinctes sq, par exemple en cas d'appels en cascade de sous-programmes, la variable SQSV peut être une table ou une pile. La macro-instruction de restauration REST peut être remplacée par une instruction de chargement dans le registre SQRG de la variable SQSV ou de la dernière donnée de série sauvegardée dans cette variable.

Il peut également être prévu une macro-instruction SQCK(sq,s) de comparaison de la donnée courante sq<s> de la série sq attribuée à la fonction en cours d'exécution. La macro-instruction SQCK(sq,s) peut être insérée n'importe où dans le programme, et autant de fois que nécessaire. Cette macro-instruction compare la donnée courante sq<s> de la série sq se trouvant dans le registre SQRG à une constante égale à une valeur attendue calculée par le module SQTL en fonction de la donnée initiale sq<0> de la série sq et du numéro s de l'étape en cours. La valeur de cette constante est calculée et insérée par le module SQTL dans le fichier SQSN, où elle est associée à un nom qui est utilisé dans les instructions correspondant à la macro-instruction et peut être défini à partir de la valeur de la donnée initiale sq<0> de la série sq et du numéro s de l'étape en cours.

Dans le cas où la donnée de série à tester est une valeur finale de série, le module SQTL calcule la valeur attendue en déterminant le complément binaire à un de la valeur de la donnée initiale sq<0> de la série sq définie dans le fichier SQIN.

Après une première écriture ou une modification du code source SC, le programme EXC est généré en deux étapes. Au cours d'une première étape illustrée par la figure 2A, le module de pré-compilation PPSC est exécuté sur le code source SC, en désactivant la prise en compte des valeurs des constantes éventuellement définies dans le fichier SQSN. Le module de pré-compilation PPSC génère alors un code source précompilé PPSC dans lequel les macro-instructions définies dans le fichier SQMC sont remplacées par les instructions correspondantes, mais dont certaines comportent en tant qu'opérandes des noms de constantes dont les valeurs sont à calculer par le module SQTL. Les valeurs de constantes calculées par le module SQTL sont introduites dans le fichier SQSN. Les noms de ces constantes définies dans le fichier SQSN sont choisis de manière à être identifiables sans aucun doute par le module SQTL (et donc être choisis en fonction du langage du code source SC ou des évolutions qu'il pourrait subir). Tous les paramètres permettant de calculer la valeur de chacune de ces constantes peuvent être contenus dans le nom de cette constante, de manière à ce que celle-ci puisse être stockée dans le fichier SQSN, et prise en compte par de futures compilations, et ce sans autre intervention du programmeur.

Au cours d'une seconde étape illustrée par la figure 2B, le module de pré-compilation PPSC est exécuté sur le code source SC, en activant la prise en compte des valeurs des constantes définies dans le fichier SQSN. Le module de pré-compilation PPSC génère alors un code source précompilé PPSC dans lequel les macro-instructions définies dans le fichier SQMC sont remplacées par les instructions correspondantes, et dont les noms de constantes définies dans le fichier SQSN sont remplacées par leurs valeurs respectives telles que définies dans ce fichier. Le code source précompilé PPSC ainsi généré peut alors être traité par le compilateur CMP.

Le module SQTL est configuré pour rechercher dans le fichier du code source précompilé PPSC, parmi les instructions résultant de la pré-compilation, les instructions correspondant à une macro-instruction de compensation SGC, les instructions correspondant à une macro-instruction de calcul ESG de la donnée finale d'une série de données, et les instructions correspondant à une macro-instruction de vérification SQCK, SQFC de la valeur d'une donnée d'une série de données. Pour chaque instruction de compensation SGC(sq,s,X) présente dans le fichier source SC, le module SQTL calcule la valeur de la donnée sq<s-1> de la série de données sq à l'étape s-1, par un calcul itératif à partir de la donnée initiale sq<0> de la série sq, calcule ensuite la donnée sqx de la série sq après introduction dans la série sq de la valeur X (sqx=SG(sq<s-1>,X)), puis recherche la valeur de compensation CP telle que :

SG(sqx,CP) = SIG(sqx,CP) = SG(sq<s-1>,s) = sq<s>. A cet effet, si la fonction SG est inversible en SG$^{-1}$, alors (sqx, CP) = SG$^{-1}$(sq<s>). Si la fonction SG choisie est telle que SG(sqx,CP) = SIG(sqx,CP), la fonction SIG étant inversible en SIG$^{-1}$, alors (sqx, CP) = SG$^{-1}$(sq<s>).

Si la fonction SG n'est pas inversible, toutes les valeurs possibles de CP peuvent être testées jusqu'à ce que l'équation SG(sqx,CP) = sq<s> soit vérifiée. La valeur CP peut être associée dans le fichier SQSN à un nom de constante contenant la valeur initiale sq<0> de la série sq, le numéro de l'étape s et la valeur de la donnée à compenser X.

Pour chaque instruction ESG(sq,s) de calcul de donnée finale d'une série sq à l'étape n, le module SQTL calcule la valeur sq<n>' de la donnée finale de la série sq à l'étape n par un calcul itératif à partir de la donnée initiale sq<0> de la série sq, en utilisant à chaque itération l'équation sq<s+1> = SG(sq<s>,s+1), puis recherche une valeur de constante finale CF telle que la signature SG(sq<n>',CF) soit égale au complément binaire à un ~(sq<0>) de la donnée initiale sq<0> de la série sq, lue dans le fichier SQIN. A cet effet, si la fonction SG n'est pas inversible, toutes les valeurs possibles de la constante CF peuvent être testées jusqu'à ce que l'équation SG(sq<n>',CF) = ~(sq<0>) soit vérifiée. La valeur de la constante CF peut être associée dans le fichier SQSN à un nom de constante contenant la valeur initiale de la série sq<0> et le numéro de l'étape finale n.

Pour chaque instruction SQCK(sq,s) de test d'une donnée courante d'une série de données sq correspondant à une étape s, le module SQTL calcule la valeur sq<s> du numéro de série sq à l'étape s par un calcul itératif à partir de la valeur initiale sq<0> du numéro de série sq, puis génère une constante dans le fichier SQSN ayant la valeur de la série sq à l'étape s. Le nom de cette constante peut contenir la valeur initiale de la série sq<0> et le numéro de l'étape s.

La fonction de calcul de signature SIG peut être une fonction de calcul de contrôle de redondance cyclique CRC (Cyclic Redundancy Check), tel qu'un calcul de CRC sur 16 bits ou 32 bits, ou d'autres calculs de ce type.

Selon un autre mode de réalisation, la fonction de calcul de signature SIG peut mettre en oeuvre un calcul d'arithmétique modulaire portant sur des nombres appartenant à un corps de Galois de type GF(p), ou portant sur des polynômes appartenant à un corps de Galois de type GF(2"), tel qu'une multiplication modulaire modulo un nombre premier p dans le cas de GF(p), ou bien un polynôme irréductible de degré n dans le cas de GF($2^n$). p Par exemple, si les valeurs des données des séries de données sq sont codées sur 16 bits, le module choisi pour le calcul d'arithmétique modulaire peut être par exemple choisi égal à 65537 en base décimale. L'utilisation d'un tel calcul d'arithmétique modulaire présente l'avantage de pouvoir être inversible. Dans ce cas, la fonction de calcul de signature SIG peut être une multiplication modulaire dans le corps de Galois GF(p) choisi. La fonction de compensation SGC peut alors être implémentée en recherchant l'inverse multiplicatif de la valeur à compenser CP, CF. La valeur $00 pouvant être utilisée comme valeur d'erreur.

Il apparaîtra clairement à l'homme de l'art que la présente invention est susceptible de diverses variantes de réalisation et diverses applications. En particulier, l'invention peut s'appliquer à tous les programmes qu'ils soient écrits dans un langage compilé ou dans un langage interprété. Dans le cas d'un langage interprété, les traitements apparaissant sur la figure 2 ne comprennent pas de traitement compilation CMP. Le traitement de pré-compilation PCMP peut être également supprimé ou remplacé par un prétraitement consistant à remplacer les macro-instructions figurant dans le code source SC par des instructions écrites dans le langage interprété. le module SQTL est alors configuré pour déterminer les valeurs des constantes utilisées dans les macro-instructions ou dans les instructions remplaçant les macro-instructions après le prétraitement.

Par ailleurs, il n'est pas nécessaire que la donnée finale sq<n> d'une série sq soit égale au complément binaire à un de la donnée initiale sq<0> de la série sq. Il importe simplement que cette donnée finale puisse être déterminée seulement à partir de la donnée initiale sq<0> de la série sq. La donnée finale sq<n> peut également être déterminée d'autres manières. Par exemple, si la valeur sq<0> est représentée par un nom de constante, ce nom de constante peut être transformé de manière à obtenir celui représentant la donnée finale sq<n>. Les données initiale et finale sq<0> et sq<n> peuvent ainsi être choisies de manière indépendante et arbitraire, seuls les noms les désignant répondant à une règle. En effet, il est souhaitable de permettre au programmeur d'ajouter des étapes ou des instructions de calcul de signature dans une fonction du programme, sans devoir mettre à jour des calculs ou des valeurs de données de séries de données dans les fonctions qui appellent cette fonction du programme, et plus généralement dans toutes les fonctions du programme dont l'exécution implique l'exécution de cette fonction du programme.

Il importe également que la donnée finale sq<n> puisse résulter du calcul de signature sq<n> = SG(sq,CF), et donc que la donnée de compensation CF puisse être déterminée.

Bien entendu, si des étapes sont ajoutées à une fonction du programme, il est nécessaire d'exécuter à nouveau les modules de précompilation PCMP et de calcul de constante SQTL pour mettre à jour les constantes utilisées dans les macro-instructions définies dans le fichier SQMC.

Il peut être également préférable que chaque série de données attribuée à une fonction du programme pour contrôler l'exécution de cette fonction, soit unique, et donc que toutes les fonctions du programme à contrôler présentent des données initiales et finales distinctes de celles des autres fonctions du programme. Ainsi, la donnée finale d'une série de données peut être calculée par exemple par une opération arithmétique ou binaire (par exemple un décalage de bits vers la droite ou vers la gauche) appliquée à la donnée initiale. Cette opération peut faire intervenir une donnée propre au programme ou à la fonction du programme à laquelle la série de données est attribuée. La donnée finale d'une série de données peut également être choisie aléatoirement par exemple par le module SQTL et associée à la donnée initiale par la définition d'une constante dans le fichier SQSN. Le lien entre la donnée finale définie par cette constante et la série de données peut être établi par le nom attribué par le module SQTL à cette constante, qui comporte la valeur de la donnée initiale de la série de données.

**Revendications**

1. Procédé d'exécution d'un programme par un dispositif électronique, le procédé comprenant, des étapes consistant à :

   exécuter une opération (SSG) du programme (EXC) configurée pour charger une valeur choisie de manière arbitraire d'une donnée initiale (sq1<0>) appartenant à une série de données ordonnées,
   exécuter une série d'opérations de calcul (SG, SGC, ESG) réparties dans le programme, comprenant des opérations de calcul configurées chacune pour calculer une donnée courante (sq1<s>) de la série de données (sq1) en fonction d'une donnée précédente (sq1 <s-1 >) de la série de données,
   exécuter une opération de calcul finale (ESG) de la série d'opérations, configurée pour calculer une donnée finale (sq1<n>) de la série de données, et
   exécuter une opération (SQCK, SQFC) du programme, configurée pour détecter une erreur d'exécution du programme en comparant la donnée courante (sq1<s>) de la série de données avec une valeur attendue de la donnée courante ou la donnée finale, la donnée finale présentant une valeur attendue indépendante du nombre (n) de données dans la série de données, et étant calculée par l'opération finale en fonction de la donnée courante de la série de données et d'une donnée de compensation finale (CF).

2. Procédé selon la revendication 1, dans lequel une valeur attendue d'une donnée (sq1<s>) de la série de données (sq1) est calculée lors d'un prétraitement de génération du programme (EXC) par un module de calcul de constantes (SQTL) utilisées par l'opération de détection d'erreur (SQCK, SQFC) et par l'opération de calcul finale (ESG) de la série d'opérations de calcul.

3. Procédé selon la revendication 1 ou 2, dans lequel la valeur attendue de la donnée finale (sq1<n>) est déterminée uniquement à partir de la donnée initiale (sq1<0>).

4. Procédé selon l'une des revendications 1 à 3, dans lequel la valeur attendue de la donnée finale (sq1<n>) est fixée égale au complément binaire à un de la donnée initiale (sq1<0>).

5. Procédé selon l'une des revendications 1 à 4, dans lequel une des opérations de calcul de la série d'opérations de calcul est configurée pour déterminer l'une des données (sq1<s>) de la série de données (sq1) en fonction d'un rang (s) de la donnée dans la série de données.

6. Procédé selon l'une des revendications 1 à 5, dans lequel une des opérations de calcul de la série d'opérations de calcul est configurée pour déterminer une donnée (sq1<s>) de la série de données (sq1) par un calcul de signature (SG) appliqué à la donnée précédente (sq1<s-1>) de la série de données.

7. Procédé selon l'une des revendications 1 à 6, dans lequel une des opérations de calcul est configurée pour déterminer une première donnée (sq1<2>) de la série de données (sq1) en fonction de la valeur d'une variable (K) propre au programme et de la valeur de la donnée précédente de la série de données, et une opération de calcul suivante (SGC) de la série d'opérations de calcul est configurée pour déterminer en fonction de la première donnée, une seconde donnée (sq1<3>) de la série de données, la seconde donnée présentant une valeur attendue indépendante de la variable propre au programme.

8. Procédé selon l'une des revendications 1 à 7, dans lequel une donnée (sq1<s>) de la série de données (sq1) est obtenue par un calcul de contrôle de redondance cyclique appliqué à la donnée précédente (sq1<s-1>) de la série de données.

9. Procédé selon l'une des revendications 1 à 7, dans lequel une donnée (sq1<s>) de la série de données (sq1) est obtenue par un calcul arithmétique modulaire appliqué à la donnée précédente (sq1 <s-1 >) de la série de données, en choisissant pour module un nombre premier supérieur à une valeur maximum des données de la série de données.

10. Procédé selon l'une des revendications 1 à 9, comprenant des étapes consistant à :

    attribuer des séries de données distinctes (sq1, sq2) à une première fonction du programme (FNC1) et à une seconde fonction (FNC2) appelée par la première fonction,
au retour à l'exécution de la première fonction à la suite de l'appel et de l'exécution de la seconde fonction, exécuter une opération de calcul (SG) de la série d'opérations de calcul, appliquée à une donnée (sq1<1>) de la série de données de la première fonction, et à la donnée finale calculée (sq2<m>) de la série de donnée de la seconde fonction pour obtenir une troisième donnée (sq1<2>), et
exécuter une autre opération de calcul (SGC) de la série d'opérations de calcul, appliquée à la troisième donnée pour obtenir une quatrième donnée (sq1<3>) présentant une valeur attendue qui est indépendante d'une donnée finale attendue de la série de données attribuée à la seconde fonction.

11. Procédé selon l'une des revendications 1 à 10, dans lequel le programme comprend une boucle de traitement itératif mettant en oeuvre un premier compteur d'itérations (CPT) variant dans un premier sens à chaque itération, le procédé comprenant des étapes consistant à :

gérer un second compteur d'itérations (CPTI) variant dans un second sens inverse du premier sens, de sorte que la somme des valeurs du premier compteur et du second compteur reste constante, et
dans la boucle de traitement itératif, exécuter une opération de calcul (SG) de la série d'opérations de calcul, appliquée à une donnée calculée (sq1<2>) de la série de données (sq1), et à une constante (CPT+CPTI-ENCD) dépendant de la somme des valeurs du premier compteur et du second compteur, et exécuter une autre opération de calcul (SGC) appliquée à la valeur attendue de la constante pour obtenir une cinquième donnée (sq1<3>) de la série de données, présentant une valeur attendue qui est indépendante de la valeur attendue de la somme des valeurs du premier compteur et du second compteur.

12. Procédé de sécurisation de l'exécution d'un programme, mis en oeuvre par un processeur, le procédé comprenant des étapes consistant à :

générer un fichier (SQSN) de définition de valeurs de constantes utilisées par le procédé d'exécution selon l'une des revendications 1 à 11,
rechercher dans un code source ou prétraité du programme (PPSC) une instruction (SQCK, SQFC) relative à une comparaison de la donnée courante (sq1<s>) de la série de données (sq1) avec une valeur attendue de la donnée courante,
calculer la valeur attendue de la donnée courante en fonction de la donnée initiale (sq1<0>) de la série de données, et du rang (s) de la donnée courante dans la série de données, et
insérer dans le fichier de définition de valeurs de constantes (SQSN) une constante ayant la valeur attendue calculée.

13. Procédé selon la revendication 12, comprenant des étapes consistant à :

rechercher dans le code source du programme une instruction relative à une opération de calcul finale (ESG) de la série d'opérations de calcul,
calculer la valeur d'une donnée de compensation finale (CF) à laquelle est appliquée l'opération de calcul finale (ESG), de manière à ce que l'opération de calcul finale appliquée à la valeur de compensation finale fournisse la donnée finale attendue (sq1<n>) de la série de données (sq1), et
insérer dans le fichier de déclaration de valeurs de constantes (SQSN) une constante ayant la valeur de la donnée de compensation finale.

14. Procédé selon la revendication 12 ou 13, comprenant des étapes consistant à :

rechercher dans le code source du programme une instruction de compensation (SGC) relative à une opération de calcul (SG) d'une donnée de la série de données (sq1), appliquée à une donnée (TST, K) n'appartenant pas à la série de données,
calculer la valeur d'une donnée de compensation à laquelle est appliquée l'opération de calcul de l'instruction de compensation, de manière à ce que cette opération de calcul fournisse une donnée de la série de données (sq<3>), qui est indépendante d'une valeur attendue de la donnée n'appartenant pas à la série de données, et
insérer dans le fichier de déclaration de valeurs de constantes (SQSN) une constante ayant la valeur de la donnée de compensation.

15. Produit-programme informatique comprenant des instructions qui lorsqu'elles sont exécutées par un processeur mettent en oeuvre le procédé selon l'une des revendications 1 à 11.

**16.** Produit-programme informatique selon la revendication 15, dans lequel les opérations de calcul (SG, ESG) de la série d'opérations de calcul et les opérations de détection d'erreur (SQFC, SQCK) se présentent sous la forme de macro-instructions.

**Patentansprüche**

**1.** Verfahren zum Ausführen eines Programms durch eine elektronische Vorrichtung, das Verfahren umfassend Schritte, die bestehen aus:

Ausführen einer Operation (SSG) des Programms (EXC), die zum Laden eines willkürlich gewählten Werts einer Anfangsdateneinheit (sq1<0>) konfiguriert ist, die zu einer Reihe geordneter Daten gehört, Ausführen einer Reihe von Rechenoperationen (SG, SGC, ESG), die in dem Programm verteilt sind, umfassend Rechenoperationen, die jeweils zum Berechnen einer aktuellen Dateneinheit (sq1<s>) der Reihe von Daten (sq1) in Abhängigkeit von einer vorherigen Dateneinheit (sq1<s-1>) der Reihe von Daten konfiguriert sind, Ausführen einer Endrechenoperation (ESG) der Reihe von Operationen, die zum Berechnen einer Enddateneinheit (sq1<n>) der Reihe von Daten konfiguriert ist, und Ausführen einer Operation (SQCK, SQFC) des Programms, die zum Erkennen eines Programmausführungsfehlers anhand eines Vergleichs der aktuellen Dateneinheit (sq1<s>) der Reihe von Daten mit einem erwarteten Wert der aktuellen Dateneinheit oder der Enddateneinheit konfiguriert ist, wobei die Enddateneinheit einen erwarteten Wert unabhängig von der Anzahl (n) von Daten in der Reihe von Daten vorweist und durch die Endoperation in Abhängigkeit von der aktuellen Dateneinheit der Reihe von Daten und einer Endkompensationsdateneinheit (CF) berechnet wird.

**2.** Verfahren nach Anspruch 1, wobei ein erwarteter Wert einer Dateneinheit (sq1<s>) der Reihe von Daten (sq1) während einer Programmerzeugungsvorverarbeitung (EXC) durch ein Modul (SQTL) zum Berechnen von Konstanten berechnet wird, die durch die Fehlererkennungsoperation (SQCK, SQFC) und durch die Endrechenoperation (ESG) der Reihe von Rechenoperationen verwendet werden.

**3.** Verfahren nach Anspruch 1 oder 2, wobei der erwartete Wert der Enddateneinheit (sq1<n>) allein aus der Anfangsdateneinheit (sq1<0>) bestimmt wird.

**4.** Verfahren nach einem der Ansprüche 1 bis 3, wobei der erwartete Wert der Enddateneinheit (sq1<n>) gleich dem binären Einerkomplement der Anfangsdateneinheit (sq1<0>) festgelegt wird.

**5.** Verfahren nach einem der Ansprüche 1 bis 4, wobei eine der Rechenoperationen der Reihe von Rechenoperationen zum Bestimmen einer Dateneinheit der Daten (sq1<s>) der Reihe von Daten (sq1) in Abhängigkeit von einem Rang (s) der Dateneinheit in der Reihe von Daten konfiguriert ist.

**6.** Verfahren nach einem der Ansprüche 1 bis 5, wobei eine der Rechenoperationen der Reihe von Rechenoperationen zum Bestimmen einer Dateneinheit (sq1<s>) der Reihe von Daten (sq1) durch eine Signaturberechnung (SG) konfiguriert ist, die auf die vorherige Dateneinheit (sq1<s-1>) der Reihe von Daten angewendet wird.

**7.** Verfahren nach einem der Ansprüche 1 bis 6, wobei eine der Rechenoperationen zum Bestimmen einer ersten Dateneinheit (sq1<2>) der Reihe von Daten (sq1) in Abhängigkeit von dem Wert einer Variablen (K), die dem Programm zugehörig ist, und dem Wert der vorherigen Dateneinheit der Reihe von Daten konfiguriert ist, und eine nachfolgende Rechenoperation (SGC) der Reihe von Rechenoperationen zum Bestimmen in Abhängigkeit von der ersten Dateneinheit einer zweiten Dateneinheit (sq1<3>) der Reihe von Daten konfiguriert ist, wobei die zweite Dateneinheit einen erwarteten Wert unabhängig von der Variablen vorweist, die dem Programm zugehörig ist.

**8.** Verfahren nach einem der Ansprüche 1 bis 7, wobei eine Dateneinheit (sq1<s>) der Reihe von Daten (sq1) durch eine Berechnung einer zyklischen Blockprüfung erhalten wird, die auf die vorherige Dateneinheit (sq1<s-1>) der Reihe von Daten angewendet wird.

**9.** Verfahren nach einem der Ansprüche 1 bis 7, wobei eine Dateneinheit (sq1<s>) der Reihe von Daten (sq1) durch eine modulare arithmetische Berechnung erhalten wird, die auf die vorherige Dateneinheit (sq1<s-1>) der Reihe von Daten angewendet wird, wobei für ein Modul eine Primzahl gewählt wird, die größer als ein Maximalwert der Daten der Reihe von Daten ist.

**10.** Verfahren nach einem der Ansprüche 1 bis 9, umfassend Schritte, die bestehen aus:

Zuweisen der Reihen von getrennten Daten (sq1, sq2) zu einer ersten Funktion (FNC1) des Programms und zu einer zweiten Funktion (FNC2), die durch die erste Funktion aufgerufen wird, bei Rückkehr zu der Ausführung der ersten Funktion nach dem Aufruf und der Ausführung der zweiten Funktion, Ausführen einer Rechenoperation (SG) der Reihe von Rechenoperationen, die auf eine Dateneinheit (sq1<1>) der Reihe von Daten der ersten Funktion und auf die berechnete Enddateneinheit (sq2<m>) der Reihe von Daten der zweiten Funktion zum Erhalten einer dritten Dateneinheit (sq1<2>) angewendet wird, und Ausführen einer weiteren Rechenoperation (SGC) der Reihe von Rechenoperationen, die auf die dritte Dateneinheit zum Erhalten einer vierten Daten (sq1<3>) angewendet wird, die einen erwarteten Wert vorweist, der unabhängig von einer erwarteten Enddateneinheit der Reihe von Daten ist, die der zweiten Funktion zugewiesen ist.

**11.** Verfahren nach einem der Ansprüche 1 bis 10, wobei das Programm eine iterative Verarbeitungsschleife umfasst, die einen ersten Iterationszähler (CPT) implementiert, der bei jeder Iteration in eine erste Richtung variiert, das Verfahren umfassend Schritte, die bestehen aus:

Verwalten eines zweiten Iterationszählers (CPTI), der in eine zweite Richtung umgekehrt zu der ersten Richtung variiert, so dass die Summe der Werte des ersten Zählers und des zweiten Zählers konstant bleibt, und in der iterativen Verarbeitungsschleife, Ausführen einer Rechenoperation (SG) der Reihe von Rechenoperationen, die auf eine berechnete Dateneinheit (sq1<2>) der Reihe von Daten (sq1) und auf eine Konstante (CPT+CPTI-ENCD) angewendet wird, die abhängig von der Summe der Werte des ersten Zählers und des zweiten Zählers ist, und Ausführen einer weiteren Rechenoperation (SGC), die auf den erwarteten Wert der Konstante zum Erhalten einer fünften Dateneinheit (sq1<3>) der Reihe von Daten angewendet wird, die einen erwarteten Wert vorweist, der unabhängig von dem erwarteten Wert der Summe der Werte des ersten Zählers und des zweiten Zählers ist.

**12.** Verfahren zum Sichern der Ausführung eines Programms, das durch einen Prozessor implementiert wird, das Verfahren umfassend Schritte, die bestehen aus:

Erzeugen einer Datei (SQSN) zum Definieren konstanter Werte, die durch das Ausführungsverfahren nach einem der Ansprüche 1 bis 11 verwendet werden, Suchen in einem Quell- oder vorverarbeiteten Code des Programms (PPSC) nach einer Anweisung (SQCK, SQFC) bezüglich eines Vergleichs der aktuellen Dateneinheit (sq1<s>) der Reihe von Daten (sq1) mit einem erwarteten Wert der aktuellen Dateneinheit, Berechnen des erwarteten Werts der aktuellen Dateneinheit in Abhängigkeit von der Anfangsdateneinheit (sq1<0>) der Reihe von Daten und dem Rang (s) der aktuellen Dateneinheit in der Reihe von Daten, und Einfügen in die Konstantenwertdefinitionsdatei (SQSN) einer Konstante, die den berechneten erwarteten Wert aufweist.

**13.** Verfahren nach Anspruch 12, umfassend Schritte, die bestehen aus:

Suchen in dem Quellcode des Programms nach einer Anweisung bezüglich einer Endrechenoperation (ESG) der Reihe von Rechenoperationen, Berechnen des Werts einer Endkompensationsdateneinheit (CF), auf die die Endrechenoperation (ESG) angewendet wird, so dass die Endrechenoperation, die auf den Endkompensationswert angewendet wird, die erwartete Enddateneinheit (sq1<n>) der Reihe von Daten (sq1) liefert, und Einfügen in die Konstantenwertdeklarationsdatei (SQSN) einer Konstante, die den Wert der Endkompensationsdateneinheit aufweist.

**14.** Verfahren nach Anspruch 12 oder 13, umfassend Schritte, die bestehen aus:

Suchen in dem Quellcode des Programms nach einer Kompensationsanweisung (SGC) bezüglich einer Rechenoperation (SG) einer Dateneinheit der Reihe von Daten (sq1), die auf eine Dateneinheit (TST, K) angewendet wird, die nicht zu der Reihe von Daten gehört, Berechnen des Werts einer Kompensationsdateneinheit, auf die die Rechenoperation der Kompensationsanweisung angewendet wird, so dass diese Rechenoperation eine Dateneinheit der Reihe von Daten (sq<3>) liefert, die unabhängig von einem erwarteten Wert der Dateneinheit ist, die nicht zu der Reihe von Daten gehört, und

Einfügen in die Konstantenwertdeklarationsdatei (SQSN) einer Konstante, die den Wert der Kompensationsdateneinheit aufweist.

15. Computerprogrammprodukt, umfassend Anweisungen, die, wenn sie durch einen Prozessor ausgeführt werden, das Verfahren nach einem der Ansprüche 1 bis 11 implementieren.

16. Computerprogrammprodukt nach Anspruch 15, wobei die Rechenoperationen (SG, ESG) der Reihe von Rechenoperationen und die Fehlererkennungsoperationen (SQFC, SQCK) in Form von Makroanweisungen erscheinen.

**Claims**

1. A method of executing a program by an electronic device, the method comprising steps of:

   • executing an operation (SSG) of the program (EXC) configured to load an arbitrarily chosen value of an initial data item (sq1<0>) belonging to a series of ordered data,
   • executing a series of calculation operations (SG, SGC, ESG) distributed in the program, comprising calculation operations each configured to calculate a current data item (sq 1 < s >) of the data series (sq1) based on a preceding data item (sq1<s-1>) of the data series,
   • performing a final calculation operation (ESG) of the series of operations, configured to calculate a final data item (sq1<n>) of the data series, and
   • executing an operation (SQCK, SQFC) of the program configured to detect a program execution error by comparing the current data item (sq1<s>) of the data series with an expected value of the current data item or the final data item, the final data item having an expected value independent of the number (n) of data items in the data series and being calculated by the final operation based on the current data item of the data series and a final compensation data item (CF).

2. The method according to claim 1, wherein an expected value of a data item (sq 1 < s >) of the data series (sq1) is calculated during a pre-processing step for generating the program (EXC), by a module (SQTL) for calculating constants, used by the error detection operation (SQCK, SQFC) and by the final calculation operation (ESG) of the series of calculation operations.

3. The method according to claim 1 or 2, wherein the expected value of the final data item (sq1<n>) is determined solely from the initial data item (sq1<0>).

4. The method according to one of claims 1 to 3, wherein the expected value of the final data item (sq1<n>) is set equal to the binary complement to one of the initial data item (sq1<0>).

5. The method according to one of claims 1 to 4, wherein one of the calculation operations of the series of calculation operations is configured to determine one of the data items (sq 1 < s >) of the data series (sq1) based on a rank (s) of the data item in the data series.

6. The method according to one of claims 1 to 5, in which one of the calculation operations of the series of calculation operations is configured to determine a data item (sq1<s>) of the data series (sq1) by calculating a signature (SG) applied to the previous data item (sq1<s-1>) of the data series.

7. The method according to one of claims 1 to 6, wherein one of the calculation operations is configured to determine a first data item (sq1<2>) of the data series (sq1) based on the value of a variable (K) specific to the program and the value of the preceding data item of the data series, and a subsequent calculation operation (SGC) of the series of calculation operations is configured to determine bases on the first data item a second data item (sq1<3>) of the data series, the second data item having an expected value independent of the program-specific variable.

8. The method according to one of claims 1 to 7, wherein a data item (sq 1 < s >) of the data series (sq1) is obtained by a cyclic redundancy check calculation applied to the previous data item (sq1<s-1>) of the data series.

9. The method according to one of claims 1 to 7, wherein a data item (sq 1 < s >) of the data series (sq1) is obtained by a modular arithmetic calculation applied to the preceding data item (sq1<s-1>) of the data series, choosing as a modulus a prime number greater than a maximum value of the data items of the data series.

10. The method according to one of claims 1 to 9, comprising the steps of:

• allocating distinct data series (sq1, sq2) to a first function of the program (FNC1) and a second function (FNC2) called by the first function,
• upon returning to the first function following the call and execution of the second function, performing a calculation operation (SG) of the series of calculation operations, applied to a data item (sq1<1>) of the data series of the first function and to the calculated final data item (sq2<m>) of the data series of the second function to obtain a third data item (sq1<2>), and
• performing another calculation operation (SGC) of the series of calculation operations, applied to the third data item to obtain a fourth data item (sq1<3>) having an expected value which is independent of an expected final data item of the series assigned to the second function.

11. The method according to one of claims 1 to 10, wherein the program comprises an iterative processing loop implementing a first iteration counter (CPT) varying in a first direction at each iteration, the method comprising steps of:

• managing a second iteration counter (CPTI) varying in a second direction opposite to the first direction, so that the sum of the values of the first counter and the second counter remains constant, and
• in the iterative processing loop, performing a calculation operation (SG) of the series of calculation operations, applied to a calculated data item (sq1<2>) of the data series (sq1), and to a constant (CPT+CPTI-ENCD) based on the sum of the values of the first counter and the second counter, and performing another calculation operation (SGC) applied to the expected value of the constant to obtain a fifth data item (sq1<3>) of the data series having an expected value which is independent of the expected value of the sum of the values of the first counter and the second counter.

12. A method for securing execution of a program, implemented by a processor, the method comprising steps of:

• generating a file (SQSN) for declaring values of constants used by the execution method according to one of claims 1 to 11,
• searching in source code or pre-processed code of the program (PPSC) for an instruction (SQCK, SQFC) involving a comparison of the current data item (sq 1 < s>) of the data series (sq1) with an expected value of the current data item,
• calculating the expected value of the current data item based on the initial data item (sq1<0>) of the data series and the rank (s) of the current data item in the data series, and
• inserting into the constant value declaration file (SQSN) a constant having the calculated expected value.

13. The method of claim 12, comprising the steps of:

• searching in the source code of the program for an instruction involving a final calculation operation (ESG) of the series of calculation operations,
• calculating the value of a final compensation data item (CF) to which the final calculation operation (ESG) is applied, so that the final calculation operation applied to the final compensation value provides the expected final data item (sq1<n>) of the data series (sq1), and
• inserting a constant having the value of the final compensation data item into the constant value declaration file (SQSN).

14. The method of claim 12 or 13, comprising the steps of:

• searching in the source code of the program for a compensation instruction (SGC) involving a calculation operation (SG) of a data item of the data series (sq1) applied to a data item (TST, K) not belonging to the data series,
• calculating the value of a compensation data item to which the calculation operation of the compensation instruction is applied so that this calculation operation produces a data item of the data series (sq<3>) which is independent of an expected value of the data item not belonging to the data series, and
• inserting a constant having the value of the compensation data item into the constant value declaration file (SQSN).

15. A computer program product comprising instructions which, when executed by a processor, implement the method according to any of claims 1 to 11.

16. The computer program product according to claim 15, wherein the calculation operations (SG, ESG) of the series of calculation operations and the error detection operations (SQFC, SQCK) are in the form of macros.

Fig. 1

Fig. 2A

Fig. 2B

SSG(sq1)
*(sq1<0>=1234)*

SC1

SI0

SG(sq1,1):
*(sq1<1>=EB93)*

SI1

SG(sq1,2)
*(sq1<2>=175E)*

SI2

SG(sq1,3)
*(sq1<3>=2894)*

SI3

SQCK(sq1,3)?

SG(sq1,n-1)
*(sq1<n-1>=767A)*

SIn

ESG(sq1,n)
*(sq1<n>=EDCB)*

SQFC(sq1)?

Fig. 3

SI1

SC2

SG(sq1,2)
*(sq1<2>=175E)*

SG(sq1,TST)

Y TST? N

SI2-1        SI2-2

SGC(sq1,3,"Y")
*(sq1<3>=2894)*

SGC(sq1,3,"N")
*(sq1<3>=2894)*

SI3

Fig. 4

SI1

SG(sq1,2)
*(sq1<2>=175E)*

SC3

CPT = 0
CPTI = ENDC

SG(sq1,CPT+CPTI−ENDC)

SI2-3

CPT = CPT+1
CPTI = CPTI−1

SGC(sq1,3,0)
*(sq1<3>=2894)*

Fig. 5        CPT<ENDC? N
Y

# Fig. 6

SC4

```
SI1
  ↓
SG(sq1,2)
(sq1<2>=175E)
  ↓
SG(sq1,K)
  ↓
```

K=K1   ⟨ K? ⟩   K≠K1,K2,K3

K=K2      K=K3

SI2-11      SI2-12      SI2-13

SGC(sq1,3,K1)   SGC(sq1,3,K2)   SGC(sq1,3,K3)
(sq1<3>=2894)   (sq1<3>=2894)   (sq1<3>=2894)

SI3

# Fig. 7

FNC1

```
SSG(sq1)
(sq1<0>=1234)
  ↓
SI1
  ↓
SG(sq1,1)
(sq1<1>=EB93)
  ↓
SI2-5
  ↓
BKUP(sq1)
CLL FNC2
  ↓
BKUP(sq2)
REST(sq1)
  ↓
SG(sq1,sq2)
(sq1<2>=DCC2)
  ↓
SGC(sq1,2,DCBA)
(sq1<2>=175E)
  ↓
SI2-6
  ↓
SG(sq1,3)
(sq1<3>=2894)
  ↓
SI3
```

SC5

FNC2

```
SSG(sq2)
(sq2<0>=2345)
  ↓
SIF0
  ↓
SG(sq2,1)
(sq2<1>=B94E)
  ↓
SIF1
  ⋮
SG(sq2,m-1)
(sq2<m-1>=5F3B)
  ↓
SIFm
  ↓
ESG(sq2,m)
(sq2<m>=DCBA)
```

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2790844
- WO 03042547 A